# EUROPÄISCHE PATENTANMELDUNG

(11) **EP 3 339 347 A1**
(43) Veröffentlichungstag der Anmeldung: **27.06.2018**
(21) Anmeldenummer: 16206660.9
(22) Anmeldetag: 23.12.2016
(51) Int. Cl.: C08G 59/14, C08G 59/40, C08G 59/68, C09J 163/00

(54) **HITZEHÄRTENDE EPOXIDHARZZUSAMMENSETZUNG ENTHALTEND EINEN BESCHLEUNIGER**

(71) Anmelder: SIKA TECHNOLOGY AG, 6340 Baar (CH)
(72) Erfinder: Jendoubi, Elyes, 05410-001 São Paulo (BR); Krüger, Christian, 8952 Schlieren (CH); Munzinger, Noah, 8047 Zürich (CH)
(74) Vertreter: Sika Patent Attorneys

(57) **Zusammenfassung**

Die vorliegende Erfindung betrifft hitzehärtende Epoxidharzzusammensetzungen, welche sich durch eine gute Lagerstabilität sowie eine tiefe Aushärtungstemperatur auszeichnen. Die Epoxidharzzusammensetzungen sind insbesondere geeignet für den Einsatz als Rohbauklebstoff und zur Herstellung von Strukturschäumen.

## Beschreibung

### Technisches Gebiet

Die Erfindung betrifft das Gebiet der schlagzähen hitzehärtenden Epoxidharzzusammensetzungen, insbesondere für den Einsatz als Rohbauklebstoff und zur Herstellung von Strukturschäumen.

### Stand der Technik

Hitzehärtende Epoxidharzzusammensetzungen sind seit langem bekannt. Es wurden schon seit einiger Zeit Anstrengungen unternommen, den grossen Nachteil von Epoxidharzzusammensetzungen, nämlich ihre Sprödigkeit, welche bei Schlagbeanspruchung dazu führt, dass die ausgehärtete Epoxidharzzusammensetzung Risse bekommt, bzw. zerstört wird, zu beheben oder zumindest stark zu vermindern. Dies wurde durch den Zusatz von Zähigkeitsmodifikatoren oder durch chemische Modifikation von Epoxidharzen bereits versucht.

Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Damit eine schnelle Härtung erfolgen kann, können neben hitzeaktivierbaren Härtern für Epoxidharze Beschleuniger verwendet. Bekannte Kategorien von Beschleunigern sind beispielsweise Harnstoffe, latente Imidazole sowie Amin-Bortrifluorid Komplexe.

Es sind derzeit jedoch Bestrebungen im Markt im Gange, die Temperatur der KTL-Öfen abzusenken. Somit ist im Markt ein grosses Bedürfnis nach hitzehärtenden Epoxidharzzusammensetzungen vorhanden, welche auch bei tieferen Temperaturen, d.h. bei einer Temperatur von 130 bis 140°C, bereits nach kurzer Zeit, typischerweise 10 bis 15 Minuten, aushärten. Werden dafür zum Beispiel aromatische Harnstoffe eingesetzt, welche aufgrund ihrer Struktur bedeutend reaktiver sind, führt dies zu grossen Problemen in der Lagerstabilität der hitzehärtenden Epoxidharzzusammensetzungen. Es besteht deshalb ein Bedürfnis nach hitzehärtenden Epoxidharzzusammensetzungen, welche einerseits bei tieferen Temperaturen aushärten jedoch eine ausreichende Lagerstabilität aufweisen.

### Darstellung der Erfindung

Aufgabe der vorliegenden Erfindung ist es daher, schlagzähe hitzehärtende Epoxidharzzusammensetzungen zur Verfügung zu stellen, welche einerseits eine gute Lagerstabilität bei Raumtemperatur aufweisen und andererseits über eine schnelle Aushärtung bei Temperaturen von 130°C bis 140°C verfügen.

Diese Aufgabe konnte überraschenderweise durch eine hitzehärtende Epoxidharzzusammensetzung gemäss Anspruch 1 gelöst werden. Diese Epoxidharzzusammensetzung lassen sich besonders gut als einkomponentiger hitzehärtender Klebstoff, insbesondere als hitzehärtender einkomponentiger Rohbauklebstoff im Fahrzeugbau, sowie zur Herstellung eines Strukturschaums für die Verstärkung von Hohlräumen, insbesondere von metallischen Strukturen, verwenden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einkomponentige hitzehärtende Epoxidharzzusammensetzungen, umfassend
a) mindestens ein Epoxidharz **A** mit durchschnittlich mehr als einer Epoxidgruppe pro Molekül;
b) Dicyandiamid **B;**
c) mindestens einen Beschleuniger **C,** wobei es sich bei dem Beschleuniger **C** um eine Verbindung handelt, erhältlich durch Umsetzung von:
   - 1 Gewichtsteil eines Amin/Epoxy-Addukts (a) mit
   - 0.1 bis 0.8, vorzugsweise 0.2 bis 0.6, Gewichtsteilen einer Verbindung (b), ausgewählt der Gruppe bestehend aus Phenolharzen und mehrwertigen Phenolverbindungen;
      wobei das Amin/Epoxy-Addukt (a) erhältlich ist durch eine Reaktion:
      - einer Aminoverbindung (1) der Formel 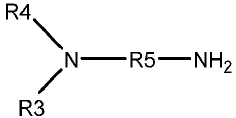 worin R3 und R4 unabhängig voneinander jeweils für eine Alkylgruppe mit 1 bis 5 Kohlenstoffatomen, insbesondere 1 bis 2 Kohlenstoffatomen, besonders bevorzugt 2 Kohlenstoffatomen, stehen und R5 für eine Alkylengruppe mit 1 bis 5 Kohlenstoffatomen, insbesondere 3 Kohlenstoffatomen, steht; oder
         -vorzugsweise einer Aminoverbindungsmischung enthaltend die Aminoverbindung (1) und 1-Amino-4-ethylpiperazin (2) in einem Gewichtsverhältnis von (1) zu (2) von 70/30 bis 99/1, insbesondere 80/20 bis 97/3;
         mit mindestens einem Epoxidharz mit durchschnittlich mehr als einer Epoxidgruppe pro Molekül (3), in einem solchen Verhältnis, dass die Menge der Epoxygruppen in dem Epoxidharz (3) 0.8 bis 2.5, insbesondere 1.0 bis 1.6, Äquivalente pro Äquivalent der Aminogruppen in der/den Aminoverbindung/en (1) oder (1) + (2) beträgt;
d) mindestens einen Zähigkeitsverbesserer **D;**
wobei das Verhältnis des Anteils Dicyandiamid **B** in Gramm pro mol Epoxidgruppen des Epoxidharz **A** von 3 - 40 g/mol Epoxidgruppen beträgt, und
wobei das Verhältnis des Anteils Beschleuniger **C** in Gramm pro mol Epoxidgruppen des Epoxidharz **A** von 5 - 35 g/mol Epoxidgruppen beträgt.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Unter einem "Zähigkeitsverbesserer" wird in diesem Dokument ein Zusatz zu einer Epoxidharzmatrix verstanden, der bereits bei geringen Zuschlägen von ≥ 5 Gew.-%, insbesondere ≥ 10 Gew.-%, bezogen auf das Gesamtgewicht der Epoxidharzzusammensetzungen, eine deutliche Zunahme der Zähigkeit bewirkt und somit in der Lage ist, höhere Biege-, Zug-, Schlag-oder Stossbeanspruchung aufzunehmen, bevor die Matrix einreisst oder bricht.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23 °C bezeichnet.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

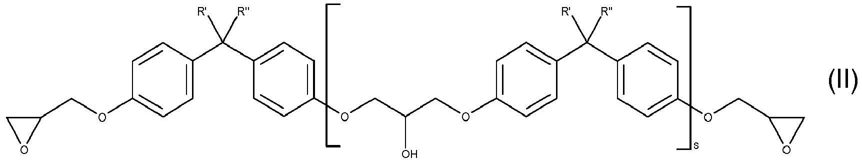

Hierbei stehen die Substituenten R' und R" unabhängig voneinander entweder für H oder CH₃.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 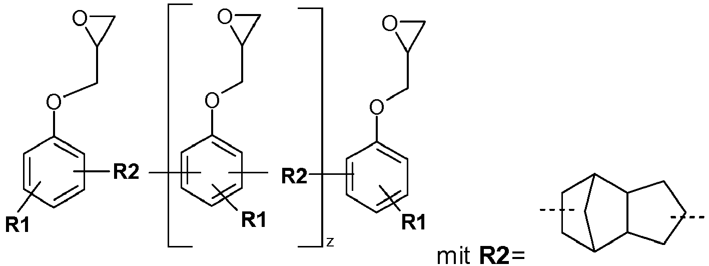 oder CH₂, **R1 =** H oder Methyl und z = 0 bis 7.

Insbesondere handelt es sich hierbei um Phenol- oder Kresol-Epoxid-Novolake (**R2** = CH₂).

Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **A** ein Epoxid-Flüssigharz der Formel (II) dar.

In einer besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 50 Gew.-%, bezogen auf das Gesamtgewicht der Epoxidharzzusammensetzung.

Weiter ist es vorteilhaft, wenn es sich bei 50-100 Gew.-%, insbesondere 80-100 Gew.-%, des Epoxidharzes **A** um ein vorgenanntes Epoxid-Flüssigharz handelt.

Weiter ist es vorteilhaft, wenn es sich bei 0-30 Gew.-%, insbesondere 0-20 Gew.-%, besonders bevorzugt 5-15 Gew.-%, des Epoxidharzes **A** um ein vorgenanntes Epoxid-Festharz handelt.

Die erfindungsgemässe Zusammensetzung enthält weiterhin als Härter **B** Dicyandiamid.

Vorzugsweise weist das Dicyandiamid **B** eine Partikelgrösse D₉₈ von 0.5 - 50 µm, 3 - 15 µm, 3 - 12 µm, insbesondere 3 - 10 µm, bevorzugt 4 - 8 µm, auf.

Bevorzugt beträgt die mittlere Partikelgrösse D₅₀ von 0.5 - 50 µm, insbesondere 1 - 15 µm, bevorzugt 1 - 7 µm, insbesondere bevorzugt 2.1 - 5 µm.

Überraschenderweise wurde gefunden, dass dies in den erfindungsgemässen Zusammensetzungen zu einer Verbesserung der Haftung sowie zu einer Verbesserung der Schlagschälfestigkeit führt. Dies ist beispielsweise in der Tabelle 3 ersichtlich aufgrund besserer Zugscherfestigkeiten und besserer I-Peel-Werte. Weiter was es überraschend, dass in den erfindungsgemässen Zusammensetzungen bei einer mittlere Partikelgrösse D₅₀ von 2.1 - 5 µm eine besonders lange Lagerstabilität gefunden wurde, was durch den geringen Anstieg der Viskosität nach einer Lagerung von einer Woche bei 50 °C ersichtlich ist.

Der Begriff "mittlere Partikelgrösse" bezieht sich hier auf den D₅₀-Wert der kumulativen Volumenverteilungskurve, bei der 50 Vol.-% der Partikel einen Durchmesser aufweisen, der kleiner als der Wert ist. Die mittlere Partikelgrösse oder der D₅₀-Wert wird in der vorliegenden Erfindung durch Laserdiffraktometrie bestimmt.

Im vorliegenden Dokument bezeichnen z.B. D₁₀, D₅₀, D₉₀ und D₉₈ diejenigen Durchmesser, bei denen 10 Vol.-%, 50 Vol.-% ("mittlere Partikelgrösse"), 90 Vol.-% beziehungsweise 98 Vol.-% der Partikel einen kleineren Durchmesser haben, bestimmt durch Laserdiffraktiometrie.

Die erfindungsgemässe Zusammensetzung enthält weiterhin mindestens einen Beschleuniger **C,** wobei es sich bei dem Beschleuniger **C** um eine Verbindung handelt, erhältlich durch Umsetzung von:
- 1 Gewichtsteil eines Amin/Epoxy-Addukts (a) mit
- 0.1 bis 0.8, vorzugsweise 0.2 bis 0.6, Gewichtsteilen einer Verbindung (b), ausgewählt der Gruppe bestehend aus Phenolharzen und mehrwertigen Phenolverbindungen;
   wobei das Amin/Epoxy-Addukt (a) erhältlich ist durch eine Reaktion:
   -einer Aminoverbindung (1) der Formel 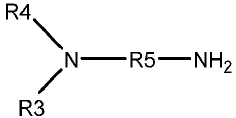 worin R3 und R4 unabhängig voneinander jeweils für eine Alkylgruppe mit 1 bis 5 Kohlenstoffatomen, insbesondere 1 bis 2 Kohlenstoffatomen, besonders bevorzugt 2 Kohlenstoffatomen, stehen und R5 für eine Alkylengruppe mit 1 bis 5 Kohlenstoffatomen, insbesondere 3 Kohlenstoffatomen, steht; oder
      -vorzugsweise einer Aminoverbindungsmischung enthaltend die Aminoverbindung (1) und 1-Amino-4-ethylpiperazin (2) in einem Gewichtsverhältnis von (1) zu (2) von 70/30 bis 99/1, insbesondere 80/20 bis 97/3;
      mit mindestens einem Epoxidharz mit durchschnittlich mehr als einer Epoxidgruppe pro Molekül (3), in einem solchen Verhältnis, dass die Menge der Epoxygruppen in dem Epoxidharz (3) 0.8 bis 2.5, insbesondere 1.0 bis 1.6, Äquivalente pro Äquivalent der Aminogruppen in der/den Aminoverbindung/en (1) oder (1) + (2) beträgt.

Die Aminoverbindung (1) ist vorzugsweise ausgewählt aus der Gruppe bestehend aus Dimethylaminopropylamin, Diethylaminopropylamin, Dipropylaminopropylamin, Dibutylaminopropylamin, Dimethylaminoethylamin, Diethylaminoethylamin, Dipropylaminoethylamin und Dibutylaminoethylamin.

Besonders bevorzugt handelt es sich um H₂NCH₂CH₂CH₂N(C₂H₅)₂ (3-(Diethylamino)propylamin) oder H₂NCH₂CH₂CH₂N(CH3)₂ (3-(Dimethylamino)-1-propylamin), am meisten bevorzugt um H₂NCH₂CH₂CH₂N(C₂H₅)₂ (3-(Diethylamino)propylamin).

Vorzugsweise handelt es sich bei dem mindestens einen Epoxidharz mit durchschnittlich mehr als einer Epoxidgruppe pro Molekül (3) des Beschleunigers **C** um ein Epoxidharz der Formel (II), wie sie vorgehend beschrieben wurde. Bevorzugt handelt es sich bei den Substituenten R' und R" um H oder CH₃, insbesondere CH₃. Der Index s steht vorzugsweise für einen Wert von ≤ 2, insbesondere von ≤ 1.5, insbesondere von ≤ 1. Bevorzugt steht s für einen Wert von kleiner als 0.2.

Die Verbindung (b) ist ausgewählt aus der Gruppe bestehend aus Phenolharzen und mehrwertigen Phenolverbindungen. Beispiele für bevorzugte Phenolharze und mehrwertige Phenolverbindungen sind Phenolharze, die aus Phenolen und Aldehyden hergestellt werden, wie beispielsweise Phenol/Formaldehyharze, Cresol/Formaldehyharze, Bisphenol A (BPA)/Formaldehyharze, Bisphenol F (BPF)/Formaldehyharze, Alkylphenol/Formaldehyharze und Mischungen davon und besonders bevorzugt Phenol- und Cresolnovolakharze sowie mehrwertige Phenolverbindungen wie Bisphenol A, Bisphenol F und Resorcinol.

Solche Beschleuniger **C** werden beispielsweise beschrieben in U.S. Pat. No. 4,689,390.

Es ist weiter vorteilhaft, wenn der Beschleuniger **C** eine Partikelgrösse D₉₀ von 2 - 80 µm, insbesondere 3 - 30 µm, vorzugsweise 3 - 16 µm, bevorzugt 3 - 10 µm, insbesondere bevorzugt 4 - 8 µm, aufweist.

Bevorzugt beträgt die mittlere Partikelgrösse D₅₀ von 0.5 - 50 µm, insbesondere 1 - 15 µm, bevorzugt 1 - 5 µm, besonders bevorzugt 1 - 3 µm.

Überraschenderweise wurde gefunden, dass dies in den erfindungsgemässen Zusammensetzungen zu einer Verbesserung der mechanischen Eigenschaften sowie zu einer Verbesserung der Schlagzähigkeit führt. Dies ist beispielsweise in der Tabelle 2 ersichtlich aufgrund höherer Zugfestigkeits-, Bruchdehnungs- und E-modul-Werte sowie höherer Impact-Peel-Werte. Auch wurde überraschenderweise gefunden, dass dies in den erfindungsgemässen Zusammensetzungen zu einer Verbesserung der Lagerstabilität führt.

Weiter kann es vorteilhaft sein, wenn die erfindungsgemässen Zusammensetzungen weniger als 2 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, an Beschleunigern ausgewählt aus der Liste bestehend aus Harnstoffen, verkapselten tertiären Aminen, blockierten tertiären Aminen, latenten Imidazolen und Amin-Bortrifluorid Komplexen aufweist, bezogen auf das Gesamtgewicht der Epoxidharzzusammensetzung.

Das Verhältnis des Anteils Dicyandiamid **B** in Gramm pro mol Epoxidgruppen des Epoxidharz **A** beträgt von 3 - 40 g/mol Epoxidgruppen, und das Verhältnis des Anteils Beschleuniger **C** in Gramm pro mol Epoxidgruppen des Epoxidharz **A** beträgt von 5 - 35 g/mol Epoxidgruppen.

Vorzugsweise beträgt das Verhältnis des Anteils Dicyandiamid **B** in Gramm pro mol Epoxidgruppen des Epoxidharz **A** von 3 - 27, vorzugsweise 3 - 25 g/mol Epoxidgruppen. Überraschenderweise wurde gefunden, dass dies die Möglichkeit einer Blasenbildung im der Zusammensetzung während der Aushärtung, was zu einer Reduktion der Haftungswerte und der mechanischen Eigenschaften führen kann, stark reduziert.

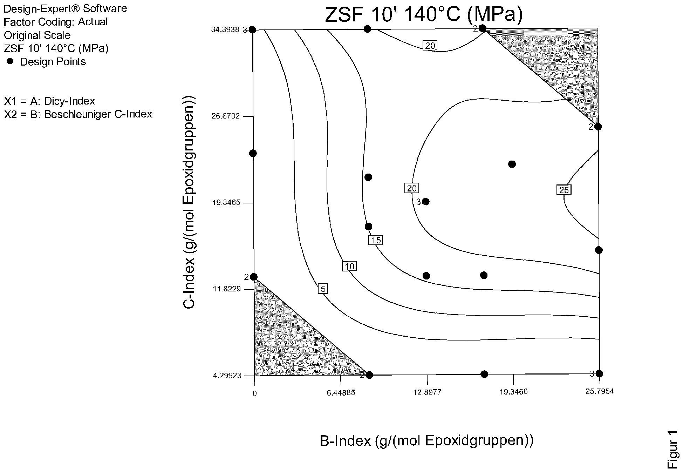

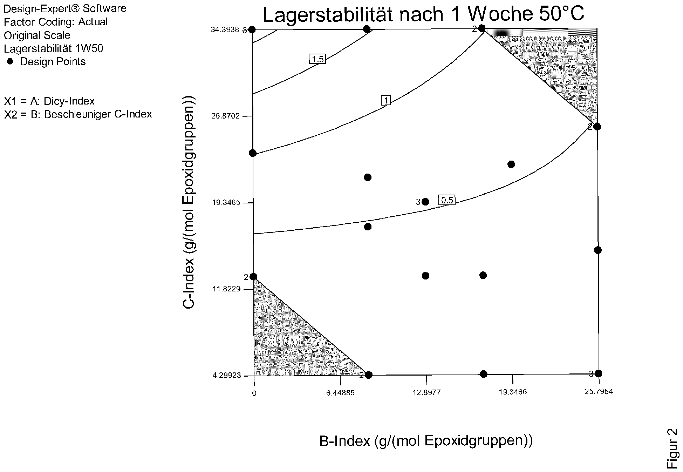

Vorzugsweise beträgt das Verhältnis des Anteils Dicyandiamid **B** in Gramm pro mol Epoxidgruppen des Epoxidharz **A** von 6 - 30, 8 - 25, 12 - 25, 14 - 25, 17 - 25, bevorzugt 19 - 25, g/mol Epoxidgruppen. Überraschenderweise wurde gefunden, dass dadurch hohe Haftungswerte und besonders überraschenderweise hohe Werte für die Lagerstabilität erhalten werden. Dies ist beispielsweise in den Figuren 1 und 2 ersichtlich.

Vorzugsweise beträgt das Verhältnis des Anteils Beschleuniger **C** in Gramm pro mol Epoxidgruppen des Epoxidharz **A** von 10 - 26, 12 - 25, 15 - 22, g/mol Epoxidgruppen.

Überraschenderweise wurde gefunden, dass dadurch hohe Haftungswerte erhalten werden. Dies ist beispielsweise in der Figur 1 ersichtlich.

Vorzugsweise beträgt das Verhältnis des Anteils Beschleuniger **C** in Gramm pro mol Epoxidgruppen des Epoxidharz **A** beträgt von 5 - 26, 5 - 25, 5 - 22, 5 - 20, 5 - 18, g/mol Epoxidgruppen.

Überraschenderweise wurde gefunden, dass dadurch eine hohe Lagerstabilität erhalten wird. Dies ist beispielsweise in der Figur 2 ersichtlich.

Besonders bevorzugt beträgt das Verhältnis des Anteils Dicyandiamid **B** in Gramm pro mol Epoxidgruppen des Epoxidharz **A** von 6 - 30, 8 - 30, 8 - 25, 12 - 25, 14 - 25, 14 - 22, g/mol Epoxidgruppen, und das Verhältnis des Anteils Beschleuniger **C** in Gramm pro mol Epoxidgruppen des Epoxidharz **A** beträgt von 10 - 26, 10 - 25, 12 - 25, 12 - 22, 15 - 20, g/mol Epoxidgruppen.

Dies ist insbesondere einer guten Haftung bei gleichzeitiger langer Lagerstabilität zuträglich.

Weiter kann es vorteilhaft sein, wenn die Summe der beiden Verhältnisse ((Verhältnis des Anteils Dicyandiamid **B** in Gramm pro mol Epoxidgruppen des Epoxidharz **A)** + (Verhältnis des Anteils Beschleuniger **C** in Gramm pro mol Epoxidgruppen des Epoxidharz **A)** von 20 - 40 g/mol g/mol Epoxidgruppen, vorzugsweise von 55 - 35 g/mol g/mol Epoxidgruppen, beträgt. Dies ist insbesondere vorteilhaft, wenn es sich bei dem Zähigkeitsverbesserer **D** um ein endständig blockiertes Polyurethanpolymer **D1** handelt. Dies ist dahingehend von Vorteil, dass dadurch hohe Haftungswerte (ZSF) erhalten werden. Dies ist beispielsweise in Tabelle 4 ersichtlich.

Weiter kann es vorteilhaft sein, wenn das Verhältnis der beiden Verhältnisse ((Verhältnis des Anteils Dicyandiamid **B** in Gramm pro mol Epoxidgruppen des Epoxidharz **A)** / (Verhältnis des Anteils Beschleuniger **C** in Gramm pro mol Epoxidgruppen des Epoxidharz **A)** von 0.2 - 3, insbesondere von 0.3 - 2.5, besonders bevorzugt von 0.5 - 1.5, beträgt. Dies ist dahingehend von Vorteil, dass dadurch hohe Haftungswerte erhalten werden.

Dies ist insbesondere vorteilhaft, wenn es sich bei dem Zähigkeitsverbesserer **D** um ein endständig blockiertes Polyurethanpolymer **D1** oder ein Flüssigkautschuk **D2** handelt, insbesondere im Fall von endständig blockierten Polyurethanpolymeren **D1.** Dies ist beispielsweise in Tabelle 4 ersichtlich.

Die hitzehärtende Epoxidharzzusammensetzung enthält gegebenenfalls mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1,** Flüssigkautschuken **D2** und Core-Shell-Polymeren **D3.**

Handelt es sich bei dem Zähigkeitsverbesserer **D** um ein endständig blockiertes Polyurethanpolymer **D1** oder ein Core-Shell-Polymer **D3,** ist dies dahingehend von Vorteil, dass dadurch hohe Haftungswerte erhalten werden, insbesondere im Fall von endständig blockierten Polyurethanpolymeren **D1.** Dies ist beispielsweise in Tabelle 4 ersichtlich.

Weiter ist dies vorteilhaft, wenn es sich bei dem Zähigkeitsverbesserer **D** um ein Flüssigkautschuk **D2** oder ein Core-Shell-Polymer **D3** handelt. Dies ist dahingehend von Vorteil, dass dadurch hohe Lagerstabilitätswerte erhalten werden, insbesondere im Fall von Core-Shell-Polymer **D3.** Dies ist beispielsweise in Tabelle 4 ersichtlich.

Weiter ist dies vorteilhaft, wenn es sich bei dem Zähigkeitsverbesserer **D** um ein endständig blockiertes Polyurethanpolymer **D1** oder ein Core-Shell-Polymer **D3** handelt. Dies ist dahingehend von Vorteil, dass dadurch hohe Schlagschälfestigkeitswerte erhalten werden, insbesondere im Fall von endständig blockierten Polyurethanpolymeren **D1.** Dies ist beispielsweise in Tabelle 4 ersichtlich.

In einer Ausführungsform ist der Zähigkeitsverbesserer **D** ein endständig blockiertes Polyurethanpolymer **D1,** vorzugsweise handelt es sich um ein endständig blockiertes Polyurethanprepolymer der Formel (I).

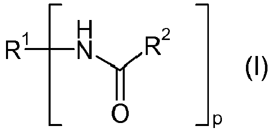

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

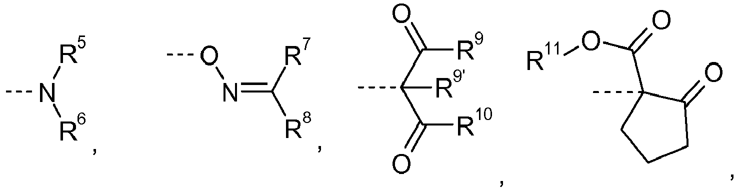

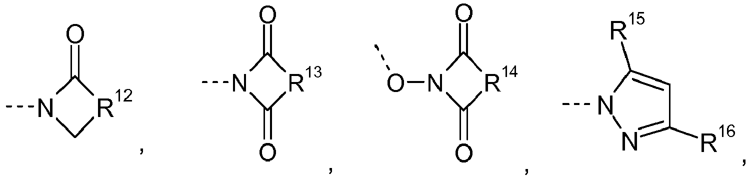

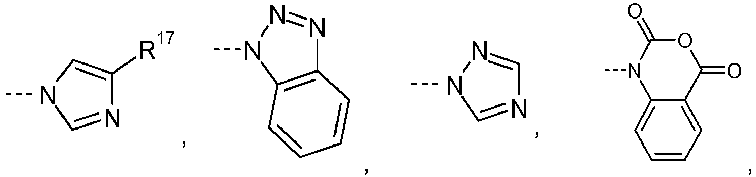

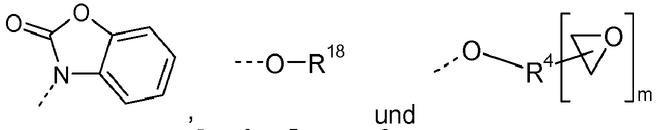

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl-oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶ R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln 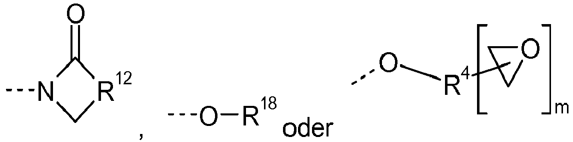 Als Substituent der Formel 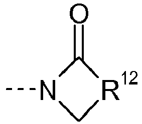 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

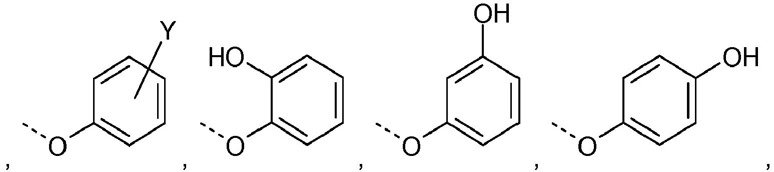

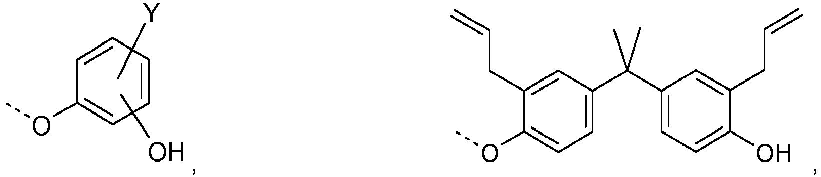

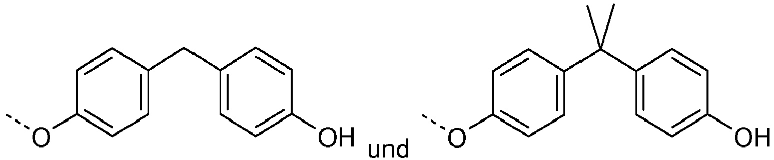

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für ---O-R¹⁸.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppengruppen, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(iso-cyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, z.B. die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0,02 mEq/g und mit einem mittleren Molekulargewicht im Bereich von 1000 - 30'000 Dalton, Polyoxybutylendiole und -triole, Polyoxypropylendiole und -triole mit einem mittleren Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von BASF unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hypox® CTBN von Emerald Perfomance Materials) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Desweiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hypro® ATBN von Emerald Perfomance Materials vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII)

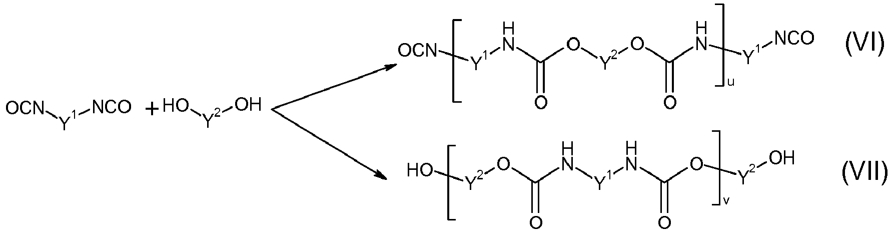

Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer der folgenden Formel gebildet werden:

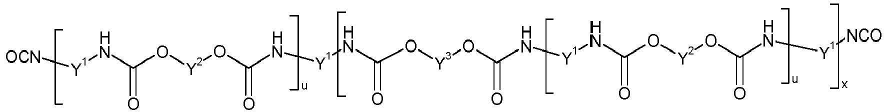

Aus der Spezies der Formel (VII) und einem Diisocyanat mit einem divalenten organischen Rest Y⁴ kann ein kettenverlängertes Polyurethanprepolymer der folgenden Formel gebildet werden:

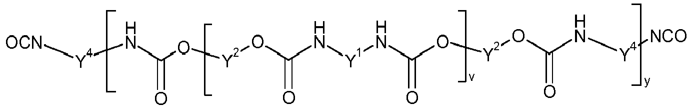

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO-Gruppen aufweisendes kettenverlängertes Polyurethanprepolymer entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polyurethanprepolymeren der Formel (I) beziehungsweise die Applikation des Klebstoffs erschweren.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymers nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylenebis-(1-Methyl-ethyliden)] (=Bisphenol-M), 4,4'-[bis-(hydroxyphenyl)-1,4-Phenylenbis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

In einer ersten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer aus mindestens einem Diisocyanat oder Triisocyanat sowie aus einem, gegebenenfalls substituierten, Polyphenol **Q_{PP}** hergestellt. Die Herstellung des Polyurethanprepolymers erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

Besonders bevorzugt ist die erste Ausführungsform.

Das Polyurethanprepolymer mit Isocyanatendgruppen weist bevorzugt elastischen Charakter auf. Es zeigt bevorzugt eine Glasumwandlungstemperatur Tg von kleiner als 0°C.

In einer weiteren Ausführungsform ist dieser Zähigkeitsverbesserer **D** ein Flüssigkautschuk **D2,** welcher insbesondere ein Acrylonitil/Butadien-Copolymer ist, welches mit Carboxylgruppen oder (Meth)acrylatgruppen oder Epoxidgruppen terminiert ist, oder ein Derivat davon ist. Derartige Flüssigkautschuke sind beispielsweise unter dem unter dem Namen Hypro™(früher Hycar®) CTBN und CTBNX und ETBN von Emerald Performance Materials LLC kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Evonik Hanse GmbH, Deutschland) kommerziell vertrieben werden, geeignet.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

In einer weiteren Ausführungsform ist der Zähigkeitsverbesserer **D** ein Core-Shell Polymer **D3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die allenfalls in Suspension vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas oder Kane ACE MX-120 von Kaneka.

Weitere vergleichbare Beispiele für Core-Shell-Polymere werden unter dem Namen Albidur™ von Evonik Hanse GmbH, Deutschland, angeboten.

Ebenso geeignet sind nanoskalige Silikate in Epoxid-Matrix, wie sie unter dem Handelnamen Nanopox von Evonik Hanse GmbH, Deutschland, angeboten werden.

Vorzugsweise beträgt der Anteil an:
Zähigkeitsverbesserer **D1** 10-60 Gew.-%, insbesondere 20-30 Gew.-%;
Zähigkeitsverbesserer **D2** 10-30 Gew.-%, insbesondere 20-30 Gew.-%:
Zähigkeitsverbesserer **D3** 10-30 Gew.-%, insbesondere 20-30 Gew.-%;
bezogen auf das Gesamtgewicht der Epoxidharzzusammensetzung.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und pyrogene Kieselsäuren.

Vorteilhaft beträgt der Gesamtanteil des gesamten Füllstoffs **F** 5 - 40 Gewichts-%, vorzugsweise 10 - 30 Gewichts-%, bezogen auf das Gesamtgewicht der Epoxidharzzusammensetzung.

In einer weiteren bevorzugten Ausführungsform kann die Zusammensetzung ein physikalisches oder chemisches Treibmittel enthalten, wie es beispielsweise unter dem Handelsnamen Expancel™ der Firma Akzo Nobel oder Celogen™ der Firma Chemtura oder unter dem Handelsnamen Luvopor® von Lehmann & Voss erhältlich ist. Der Anteil des Treibmittels beträgt vorteilhaft 0.1 - 3 Gew.-%, bezogen auf Gesamtgewicht der Epoxidharzzusammensetzung.

In einer weiteren bevorzugten Ausführungsform enthält die Zusammensetzung zusätzlich mindestens einen Epoxidgruppen-tragenden Reaktivverdünner **G.** Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Eine besonders bevorzugte einkomponentige Epoxidharzzusammensetzung umfasst:
- 10 - 60 Gew.-%, insbesondere 30 - 50 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 50-100 Gew.-%, insbesondere 80-100 Gew.-%, des Epoxidharzes **A** um ein Epoxid-Flüssigharz und bei 0-30 Gew.-%, insbesondere 0-20 Gew.-%, besonders bevorzugt 5-15 Gew.-%, des Epoxidharzes **A** um ein Epoxid-Festharz;.
- Dicyandiamid **B;**
- mindestens einen Beschleuniger **C,** wobei es sich bei dem Beschleuniger **C** um ein Reaktionsprodukt von mindestens einem Epoxidharz **AH** mit durchschnittlich mehr als einer Epoxidgruppe pro Molekül und mindestens einem aliphatischen Polyamin **PA** mit mindestens einer primären Aminogruppe und mindestens einer tertiären Aminogruppe handelt;
- mindestens einen Zähigkeitsverbesserer **D,** ausgewählt ist aus der Gruppe bestehend aus endständig blockierten Polyurethanpolymeren **D1,** Flüssigkautschuken **D2** und Core-Shell-Polymeren **D3,** vorzugsweise beträgt dabei der Anteil an:
   Zähigkeitsverbesserer **D1** 10-60 Gew.-%, insbesondere 20-30 Gew.-%;
   Zähigkeitsverbesserer **D2** 10-30 Gew.-%, insbesondere 20-30 Gew.-%:
   Zähigkeitsverbesserer **D3** 10-30 Gew.-%, insbesondere 20-30 Gew.-%;
   bezogen auf das Gesamtgewicht der Epoxidharzzusammensetzung;
   - vorzugsweise 5 - 40 Gewichts-%, vorzugsweise 10 - 30 Gewichts-%, bezogen auf das Gesamtgewicht der Epoxidharzzusammensetzung, von einem Füllstoffe **F** ausgewählt aus der Gruppe bestehend aus Calciumcarbonat, Calciumoxid und pyrogene Kieselsäuren;
   - vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G;**
- wobei das Verhältnis des Anteils Dicyandiamid **B** in Gramm pro mol Epoxidgruppen des Epoxidharz **A** von 6 - 30, 8 - 30, 8 - 25, 12 - 25, 14
- 25, 14 - 22, g/mol Epoxidgruppen, und das Verhältnis des Anteils Beschleuniger **C** in Gramm pro mol Epoxidgruppen des Epoxidharz **A** beträgt von 10 - 26, 10 - 25, 12 - 25, 12 - 22, 15 - 20, g/mol Epoxidgruppen, beträgt.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Ein Beispiel einer besonders bevorzugten Zusammensetzung ist Ex. 6 in Tabelle 3.

Es ist vorteilhaft, wenn die erfindungsgemässe Epoxidharzzusammensetzung eine Viskosität bei 25°C von 500 - 3000 Pa*s, insbesondere 1000 - 2500 Pa*s, vorzugsweise 1000 - 2000 Pa*s, aufweist. Dies ist dahingehend von Vorteil, dass dadurch eine gute Applizierbarkeit gewährleistet ist.

Auch ist es von Vorteil, wenn bei der erfindungsgemässen Epoxidharzzusammensetzung die Viskosität gemessen bei einer Messtemperatur von 25°C, nach einer Lagerung von 1 Woche bei 50°C einen Tag nach Herstellung, um weniger als 200 %, weniger als 150 %, weniger als 120 %, weniger als 100 %, weniger als 50 %, ansteigt.

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Rohbauklebstoff im Fahrzeugbau, eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und bei tiefen Temperaturen auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Härtungstemperatur zu erreichen.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 130 - 220 °C, vorzugsweise 130 - 180°C, besonders bevorzugt 130 - 150°C.

Ein weiterer Aspekt der vorliegenden Erfindung betrifft ein Verfahren zur Verklebung von hitzestabilen Substraten, welches die Schritte umfasst:
i) Applizieren einer hitzehärtenden Epoxidharzzusammensetzung, wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220 C, insbesondere von 120 - 200°C, bevorzugt zwischen 130 und 150°C, besonders bevorzugt zwischen 130 und 140°C.

Das Substrat **S2** besteht hierbei aus dem gleichen oder einem unterschiedlichen Material wie das Substrat **S1.**

Die Substrate **S1** und/oder **S2** sind insbesondere die vorgängig erwähnten Metalle und Kunststoffe.

Vorzugsweise wird in dem Schritt iii) Erhitzen der Zusammensetzung auf eine Temperatur von 100 - 220°C, insbesondere von 120 - 200°C, bevorzugt zwischen 130 und 150°C besonders bevorzugt zwischen 130 und 140°C, die Zusammensetzung für 10 min - 6 h, 10 min - 2 h, 10 min - 60 min, 10 min - 30 min, 10 min - 20 min, besonders bevorzugt 10 min - 15 min, bei der vorgenannten Temperatur belassen.

Aus einem derartigen Verfahren zum Verkleben von hitzestabilen Materialien resultiert ein verklebter Artikel. Ein derartiger Artikel ist vorzugsweise ein Fahrzeug oder ein Teil eines Fahrzeugs.

Einen weiteren Aspekt der vorliegenden Erfindung betrifft daher ein verklebter Artikel erhalten aus dem vorgenannten Verfahren. Selbstverständlich können mit einer erfindungsgemässen Zusammensetzung neben hitzehärtenden Klebstoffen auch Dichtmassen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

Einen weiteren Aspekt der vorliegenden Erfindung betrifft eine ausgehärtete Epoxidharzzusammensetzung, wie sie durch Erhitzen einer hitzehärtenden Epoxidharzzusammensetzung wie sie vorgängig im Detail beschrieben wurde, erhalten wird. Die Erhitzung erfolgt typischerweise in einem Ofen bei einer Temperatur von 100 - 220 C, bevorzugt zwischen 130 und 150°C besonders bevorzugt zwischen 130 und 140°C, vorzugsweise für 10 min - 6 h, 10 min - 2 h, 10 min - 60 min, 10 min - 30 min, 10 min - 20 min, besonders bevorzugt 10 min - 15 min, bei der vorgenannten Temperatur.

Es hat sich gezeigt, dass Beschleuniger **C,** wie sie vorgängig als Bestandteil einer hitzehärtenden Epoxidharzzusammensetzung bereits im Detail beschrieben worden sind, sich als Beschleuniger für hitzehärtende Epoxidharzzusammensetzungen bei Aushärtungstemperaturen insbesondere zwischen 130 und 150°C eignen.

Überraschenderweise wurde gefunden, dass andere Beschleuniger für hitzehärtende Epoxidharzzusammensetzungen die Anforderung der Beschleunigung bei tiefen Temperaturen bei gleichzeitiger Lagerstabilität nicht erfüllen. So ist beispielsweise in Tabelle 1 ersichtlich, dass beispielsweise bei der Verwendung von einem verkapselten tertiären Amin (LC-100, A&C Catalysts Inc) oder einem Reaktionsprodukt Epoxid-Harz mit Imidazol (A&C Catalysts Inc.) die Lagerstabilität der entsprechenden Epoxidharzzusammensetzung stark verschlechtert wird. Weiter ist die Haftung bei einer Aushärtungstemperatur von 130 °C gegenüber dem erfindungsgemässen Beschleuniger schlechter.

Die Verwendung von BF3-Amin-Adukten (OMICURE® BC120, Emerald Performance Materials) führt anderseits zu einer ungenügenden Aushärtung bei Temperaturen von 130 - 140 °C, was beispielsweise durch die Unterschiede in den Zugscherfestigkeitswerten bei 175 °C zu den Werten bei 140°C, respektive 130°C, ersichtlich ist. Weiter ist die Lagerstabilität der entsprechenden Epoxidharzzusammensetzung der Lagerstabilität des erfindungsgemässen Beschleunigers unterlegen.

Auch konnte festgestellt werden, dass durch den Zusatz eines Beschleunigers C zu einer hitzehärtenden Epoxidharzzusammensetzung diese bei bedeutend tieferer Temperatur gehärtet werden kann, als dies der Fall ohne den eines Beschleuniger **C** ist.

Überraschenderweise wurde weiter gefunden, dass die Verwendung eines Zähigkeitsverbesserers **D,** insbesondere eines Zähigkeitsverbesserers **D1,** die Haftung verbessert. So ist in Tabelle 5 ersichtlich, dass eine hitzehärtende Epoxidharzzusammensetzung ohne Zähigkeitsverbesserer eine geringere Haftung aufweist, was beispielsweise an den Werten für Zugscherfestigkeit sowie T-Peel ersichtlich ist. Weiter wurde überraschenderweise gefunden, dass diese Epoxidharzzusammensetzungen eine verringerte Lagerstabilität aufweisen.

### Beispiele

Im Folgenden werden einige Beispiele aufgeführt, welche die Erfindung weiter veranschaulichen, den Umfang der Erfindung aber in keiner Weise beschränken sollen.

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer ***D-1*** verwendet.

| | |
|---|---|
| A-Harz flüssig | Epoxid-Flüssigharz, D.E.R. 331 (Bisphenol-A-diglycidylether), Dow |
| A-Harz fest | Epoxid-Festharz, (Bisphenol-A-diglycidylether-basiert), Dow |
| Reaktivver dünner | Hexandiol-glycidylether, Denacol EX-212, Nagase America |
| D-2 | Polydis 3614, Epoxidharz-modifiziertes CTBN (40% in Epoxid-Flüssigharz, Bisphenol-A-diglycidylether-basiert), Struktol |
| D-3 | Kaneka Kane Ace MX-153 (33% in Epoxid-Flüssigharz, Bisphenol-A-diglycidylether-basiert), Core-Shell-Polymer, Kaneka |
| B | Dicyandiamid (= *"Dicy"*), Dyhard 100SF (Partikelgrösse D₉₈ von 6 µm, mittlere Partikelgrösse D₅₀ von 2-3 µm), AlzChem |
| C | Beschleuniger **C** wie er vorgehend beschrieben wurde, wobei es sich bei dem Amin/Epoxy-Addukt (a) um ein Reaktionsprodukt von (3-(Diethylamino)propylamin) und 1-Amino-4-ethylpiperazin mit einem Epoxidharz der Formel (II) handelt. Das eingesetzte Epoxidharz der Formel (II) weist Substituenten R' und R" = CH₃ sowie einen Index s von ≤ 1 auf. (Partikelgrösse D₉₀ von 4.4-6 µm, mittlere Partikelgrösse D₅₀ von 2 µm) |
| Füllstoffge misch | Gemisch aus Calciumcarbonat, Calciumoxid, pyrogene Kieselsäure |
| B-1 | Dicyandiamid, Technicure® Nano-Dicy (mittlere Partikelgrösse D₅₀ von 1-2 µm), A&C Catalysts Inc. |
| B-2 | Dicyandiamid, Dyhard 100 (Partikelgrösse D₉₈ von 30 µm, mittlere Partikelgrösse D₅₀ von 10 µm), AlzChem |
| C-1 | Beschleuniger **C** wie er vorgehend beschrieben wurde, wobei es sich bei dem Amin/Epoxy-Addukt (a) um ein Reaktionsprodukt von (3-(Diethylamino)propylamin) und 1-Amino-4-ethylpiperazin mit einem Epoxidharz der Formel (II) handelt. Das eingesetzte Epoxidharz der Formel (II) weist Substituenten R' und R" = CH₃ sowie einen Index s von ≤ 1 auf. (Partikelgrösse D₉₀ von 30 µm, mittlere Partikelgrösse D₅₀ von 10.8 µm) |
| BC-120 | Amin-BF3-Komplex, OMICURE® BC120, Emerald Performance Materials |
| LC-100 | Verkapseltes tertiäres Amin, LC-100, A&C Catalysts Inc. |
| EIA | Epoxid-Imidazol-Addukt, Reaktionsprodukt Epoxid-Harz mit Imidazol, A&C Catalysts Inc. |
| | Poly-THF 2000 (Difunktionelles Polybutylenglykol) (OH-Equivalentgewicht = ca. 1000 g/OH-Equivalent), BASF |
| | Liquiflex H (Hydroxylterminertes Polybutadien) (OH-Equivalentgewicht = ca. 1230 g/OH-Equivalent), Krahn |
| | Isophoron-diisocyanat (= "*IPDI"*)*,* Evonik |
| | Cardolite NC-700 (Cardanol, meta-substituiertes Alkenyl-mono-Phenol), Cardolite |

Eingesetzte Rohstoffe.

### Herstellung der Zusammensetzungen

Es wurden gemäss Angaben in den Tabellen 1-6 die Referenzzusammensetzungen ***Ref.1 - Ref. 5*** sowie die erfindungsgemässen Zusammensetzungen ***Ex.1 - Ex.17*** hergestellt. Die Mengenangaben in den Tabellen 1-5 sind in Gramm, die Mengenangaben in der Tabelle 6 sind in Gewichtsteilen.

Für die Herstellung der Zusammensetzungen deren Werte in den Figuren 1 und 2 abgebildet sind wurden jeweils Zusammensetzungen gemäss Tabelle 6 verwendet, wobei einzig die Menge an B, respektive an C, in Gewichtsteilen geändert wurden, um den in den X-Achsen aufgeführten B-Index, respektive den in den Y-Achsen aufgeführten C-Index, zu erhalten. Die Gewichtsteile von A-Harz flüssig, Reaktivverdünner, A-Harz fest, D1 sowie Füllstoffgemisch wurden jeweils nicht verändert. In dem in Tabelle 6 ausgewiesenen Beispiel wurde dabei beispielsweise eine Gesamtsumme von 106.25 Gewichtteilen erhalten.

Die in der Figur 1 abgebildeten Messwerte sind in MPa angegeben, die Linie mit der Markierung "20" entspricht einem Wert von 20 MPa. Die in der Figur 2 abgebildeten Messwerte entsprechen dem Viskositätsanstieg nach der Lagerung gegenüber dem Wert vor der Lagerung. Die Linie mit der Markierung "0.5" entspricht einem Viskositätsanstieg von 50 %, respektive die Linie mit der Markierung "1.5" einem Viskositätsanstieg von 150 %. Bei den Messpunkten mit den beistehenden Ziffern "2", respektive "3", handelt es sich um zweifach, respektive dreifach, bestimmte Messwerte.

### Berechnung von B-Index, C-Index, Summe (B+C-Index) und Verhältnis (B/C-Index)

Epoxidharze werden nach ihrem Epoxidgehalt eingeteilt, der auch als Epoxid-Zahl (auch EP-Zahl) bekannt ist. Im vorliegenden Dokument gibt die Epoxid-Zahl die Anzahl der Epoxidgruppen in Mol wieder, die man in 100 Gramm Kunstharz findet. So steht beispielsweise in den Tabellen als Epoxid-Zahl unter "EP-Zahl" vereinfacht ein Zahlenwert wie beispielsweise "0.54" für eine Epoxid-Zahl von 0.54 mol Epoxidgruppen/100g Harz.

Das Verhältnis des Anteils Dicyandiamid **B** in Gramm pro mol Epoxidgruppen des Epoxidharz **A** (in den Tabellen und Figuren 1 und 2 "B-Index" genannt wird beispielsweise für die Zusammensetzung Ex.6 folgendermassen berechnet.
(Menge in Gramm von Dicyandiamid) / ((Menge in Gramm von A-Harz flüssig*Epoxidzahl von A-Harz flüssig)+(Menge in Gramm von Reaktivverdünner*Epoxidzahl von Reaktivverdünner)+ (Menge in Gramm von A-Harz fest*Epoxidzahl von A-Harz fest)).
Konkret ist das
(3.41g) / ((38.42g * 0.54 mol Epoxidgruppen/100g Harz)+(0.48g * 0.80 mol Epoxidgruppen/100g Harz)+ (3.84g * 0.315 mol Epoxidgruppen/100g Harz)) = 15.26 (g/mol Epoxidgruppen).

Das Verhältnis des Anteils Beschleuniger **C** in Gramm pro mol Epoxidgruppen des Epoxidharz **A** (in den Tabellen und Figuren 1 und 2 "C-Index genannt" wird beispielsweise für die Zusammensetzung Ex.6 folgendermassen berechnet.
(Menge in Gramm des Beschleunigers, hier Beschleuniger **C**) / ((Menge in Gramm von A-Harz flüssig*Epoxidzahl von A-Harz flüssig)+(Menge in Gramm von Reaktivverdünner*Epoxidzahl von Reaktivverdünner)+ (Menge in Gramm von A-Harz fest*Epoxidzahl von A-Harz fest)).
Konkret ist das
(3.84g) / ((38.42g * 0.54 mol Epoxidgruppen/100g Harz)+(0.48g * 0.80 mol Epoxidgruppen/100g Harz)+ (3.84g * 0.315 mol Epoxidgruppen/100g Harz)) = 17.20 (g/mol Epoxidgruppen).

Die Summe aus den Werten des B-Index und des C-Index wird "Summe (B+C-Index)" genannt und wird beispielsweise für die Zusammensetzung Ex.6 folgendermassen berechnet: 15.26 + 17.20 (g/mol Epoxidgruppen) = 32.46 (g/mol Epoxidgruppen)

Das Verhältnis von Werten des B-Index geteilt durch den Wert des C-Index wird in den Tabellen "Verhältnis (B/C-Index)" genannt und wird beispielsweise für die Zusammensetzung Ex.6 folgendermassen berechnet: 15.26 (g/mol Epoxidgruppen) / 17.20 (g/mol Epoxidgruppen) = 0.89.

### Prüfmethoden:

### Zugfestigkeit, Bruchdehnung und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit (ZF), Bruchdehnung und das E-Modul 0,05-0,25%, wurden gemäss DIN EN ISO 527 bestimmt.

### Zugscherfestigkeit (ZSF) (DIN EN 1465)

Gereinigte und mit Anticorit PL 3802-39S rückbeölte Prüfbleche von Stahl Elo H420 (Dicke 1,5mm) wurden auf einer Klebfläche von 25 x 10mm mit Glaskugeln als Abstandshalter in einer Schichtdicke von 0,3 mm mit dem Klebstoff verklebt und für 35 min bei 175°C Ofentemperatur, respektive für 10 min bei 140°C Ofentemperatur, respektive für 10 min bei 135°C Ofentemperatur, respektive für 10 min bei 130°C Ofentemperatur, ausgehärtet. Auf der Oberfläche des Prüfkörpers (Substratoberfläche) war jeweils eine Temperatursonde befestigt. Das Erreichen der angegebenen Temperatur auf 1°C genau war jeweils der Beginn der Messung der Aushärtungszeit.

Die Zugscherfestigkeit wurde auf einer Zugmaschine bei einer Zuggeschwindigkeit von 10mm/min in einer 3-fach Bestimmung gemäss DIN EN 1465 bestimmt.

### Schlagschälfestigkeit/Impact peel (I-Peel) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Proben wurden für 10 min bei 140°C Ofentemperatur, respektive für 10 min bei 135°C Ofentemperatur, respektive für 10 min bei 130°C Ofentemperatur, ausgehärtet. Auf der Oberfläche des Prüfkörpers (Substratoberfläche) war jeweils eine Temperatursonde befestigt. Das Erreichen der angegebenen Temperatur auf 1°C genau war jeweils der Beginn der Messung der Aushärtungszeit.

Die Messung der Schlagschälfestigkeit erfolgte jeweils bei den angegebenen Temperaturen (23°C, -30°C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Winkelschälfestigkeit (T-Peel) (DIN 53281)

Es wurden Prüfbleche a 130 x 30 mm aus Stahl DC-04+ZE (Dicke 0,8mm) präpariert. Prüfbleche wurden auf einer Höhe von 30 mm mit einer geeigneten Stanzmaschine abgewickelt (90°). Die gereinigten und mit Anticorit PL 3802-39S rückbeölten Flächen von 100 x 30 mm wurden mit Glaskugeln als Abstandshalter in einer Schichtdicke von 0,2 mm mit dem Klebstoff verklebt und für 10 min bei 140°C Ofentemperatur, respektive für 10 min bei 135°C Ofentemperatur, respektive für 10 min bei 130°C Ofentemperatur, ausgehärtet. Auf der Oberfläche des Prüfkörpers (Substratoberfläche) war jeweils eine Temperatursonde befestigt. Das Erreichen der angegebenen Temperatur auf 1°C genau war jeweils der Beginn der Messung der Aushärtungszeit. Die Winkelschälfestigkeit wurde auf einer Zugmaschine mit einer Zuggeschwindigkeit von 50 mm/min in einer 3-fach Bestimmung als Schälkraft in N/mm im Bereich des Traversenweges von 1/6-bis 5/6 Weglänge bestimmt.

### Viskosität/Lagerstabilität Klebstoffe

Viskositätsmessungen an den Klebstoffen erfolgten 1 d nach Herstellung auf einem Rheometer vom Typ MCR 101 des Herstellers Anton Paar oszillatorisch unter Verwendung einer Platten-Platten Geometrie bei einer Temperatur von 25°C bzw. 50°C mit folgenden Parametern: 5 Hz, 1 mm Spalt, Platte-Platte-Abstand 25 mm, 1% Deformation.

Zur Bewertung der Lagerstabilität der Klebstoffe wurden die Viskositätsmessung nach Lagerung bei der angegebenen Temperatur für eine angegebene Zeit in Wochen wiederholt und der sich nach der Lagerung ergebende prozentuale Viskositätsanstieg ermittelt.

**Tabelle 1, cured = ausgehärtet, , uncured = nicht ausgehärtet, n.b. = nicht bestimmt**

| | | EP-Zahl | Ref.1 | Ex.1 | Ref.2 | Ref.3 | Ref.4 |
|---|---|---|---|---|---|---|---|
| A-Harz flüssig | | 0.54 | 39.18 | 38.51 | 38.67 | 38.67 | 38.51 |
| Reaktivverdünner | | 0.80 | 2.94 | 2.89 | 2.90 | 2.90 | 2.89 |
| A-Harz fest | | 0.22 | 4.90 | 4.81 | 4.83 | 4.83 | 4.81 |
| D-1 | | | 19.59 | 19.25 | 19.34 | 19.34 | 19.25 |
| B | | | 3.80 | 3.74 | 3.75 | 3.75 | 3.74 |
| BC-120 | | | | | | | 1.93 |
| LC-100 | | | | | 1.50 | | |
| EIA | | | | | | 1.50 | |
| C | | | | 1.93 | | | |
| Füllstoffgemisch | | | 29.59 | 28.87 | 29.01 | 29.01 | 28.87 |
| Summe: | | | 100 | 100 | 100 | 100 | 100 |
| B-Index | | | 15.46 | 15.46 | 15.46 | 15.46 | 15.46 |
| C-Index | | | - | 7.97 | 6.18 | 6.18 | 7.97 |
| Summe (B+C-Index) | | | 16.33 | 23.43 | 6.18 | 21.64 | 23.43 |
| Verhältnis (B/C-Index) | | | 17.64 | 1.94 | 2.50 | 2.50 | 1.94 |
| **ZSF, 35' 175°C** | | MPa | 37.7 | 29.9 | 30.3 | 30.8 | 28.9 |
| **ZSF, 10' 140°C** | | MPa | uncured | 20.3 | 24.8 | 22.2 | 2.5 |
| **ZSF, 10' 130°C** | | MPa | uncured | 6.4 | 3.5 | 0.1 | 0.2 |
| **I-Peel, 10' 140°C,** 23°C | | N/mm | uncured | 4.9±0.2 | 17.9 | 18.1 | 10.8±0.2 |
| **Rheologie,** 1 Tag nach Herstellung | 25°C | Pa*s | 1531 | 1308 | 2329 | 783 | 1150 |
| | 50°C | Pa*s | 771 | 497 | 517 | 215 | 441 |
| **Rheologie,** nach 1 Woche 50°C | 25°C | Pa*s | 1791 17% | 1581 21% | cured | cured | 1576 37% |
| | 50°C | Pa*s | n.b. | n.b. | n.b. | n.b. | n.b. |

**Tabelle 2**

| | | EP-Zahl | Ex.2 | | Ex.3 | | Ex.4 | |
|---|---|---|---|---|---|---|---|---|
| A-Harz flüssig | | 0.54 | 38.35 | | 38.35 | | 38.35 | |
| Reaktivverdünner | | 0.80 | 0.48 | | 0.48 | | 0.48 | |
| A-Harz fest | | 0.315 | 3.84 | | 3.84 | | 3.84 | |
| D-1 | | | 21.09 | | 21.09 | | 21.09 | |
| B | | | 3.40 | | 3.40 | | 3.40 | |
| C | | | 3.84 | | 1.92 | | | |
| C-1 | | | | | 1.92 | | 3.84 | |
| Füllstoffgemisch | | | 29.00 | | 29.00 | | 29.00 | |
| Summe: | | | 100.00 | | 100.00 | | 100.00 | |
| B-Index | | | 15.26 | | 15.26 | | 15.26 | |
| C-Index | | | 17.20 | | 17.20 | | 17.20 | |
| Summe (B+C-Index) | | | 32.46 | | 32.46 | | 32.46 | |
| Verhältnis (B/C-Index) | | | 0.89 | | 0.89 | | 0.89 | |
| **ZF, 35' 175°C** | | MPa | 26.8 | | 26.7 | | 21.9 | |
| **Bruchdehnung, 35' 175°C** | | % | 6.4 | | 6.7 | | 4.6 | |
| **E-Modul (0.05-0.25%), 35**' **175°C** | | MPa | 1770 | | 1710 | | 1470 | |
| **I-Peel, 10' 135°C** | 23°C | N/mm | 17.7 | | 16.1 | | 15.3 | |
| | | s | 0.3 | | 0.6 | | 0.5 | |
| | -30°C | N/mm | 12.0 | | 11.1 | | 11.1 | |
| | | s | 0.6 | | 1.1 | | 1.2 | |
| **Rheologie,** 1 Tag nach Herstellung | 25°C | Pa*s | 1573 | | 1580 | | 1294 | |
| | 50°C | Pa*s | 441 | | 439 | | 395 | |
| **Rheologie,** nach 1 Woche 50°C | 25°C | Pa*s | 2119 | (+35%) | 2150 | (+36%) | 1956 | (+51%) |
| | 50°C | Pa*s | 554 | (+26%) | 673 | (+53%) | 620 | (+57%) |

**Tabelle 3**

| | | EP-Zahl | Ex.5 | | Ex.6 | | Ex.7 | |
|---|---|---|---|---|---|---|---|---|
| A-Harz flüssig | | 0.54 | 38.42 | | 38.42 | | 38.42 | |
| Reaktivverdünner | | 0.80 | 0.48 | | 0.48 | | 0.48 | |
| A-Harz fest | | 0.315 | 3.84 | | 3.84 | | 3.84 | |
| D-1 | | | 21.13 | | 21.13 | | 21.13 | |
| B-1 | | | 3.41 | | | | | |
| B-2 | | | | | | | 3.41 | |
| B | | | | | 3.41 | | | |
| C | | | 3.84 | | 3.84 | | 3.84 | |
| Füllstoffgemisch | | | 28.88 | | 28.88 | | 28.88 | |
| Summe: | | | 100.00 | | 100.00 | | 100.00 | |
| B-Index | | | 15.26 | | 15.26 | | 15.26 | |
| C-Index | | | 17.20 | | 17.20 | | 17.20 | |
| Summe (B+C-Index) | | | 32.46 | | 32.46 | | 32.46 | |
| Verhältnis (B/C-Index) | | | 0.89 | | 0.89 | | 0.89 | |
| **ZSF, 10' 140°C** | | MPa | 17.2 | | 20.9 | | 18.1 | |
| | | s | 2.9 | | 1.5 | | 1.6 | |
| **I-Peel, 10' 140°C** | 23°C | N/mm | 17.2 | | 21.9 | | 20.4 | |
| | | s | 2.9 | | 0.0 | | 0.6 | |
| | -30°C | N/mm | 15.7 | | 16.6 | | 15.5 | |
| | | s | 1.0 | | 1.6 | | 0.5 | |
| **Rheologie,** 1 Tag nach Herstellung | 25°C | Pa*s | 1570 | | 1490 | | 1340 | |
| | 50°C | Pa*s | 470 | | 472 | | 416 | |
| **Rheologie,** nach 1 Woche 50°C | 25°C | Pa*s | 1780 | (+13%) | 1610 | (+8%) | 1780 | (+33%) |
| | 50°C | Pa*s | 500 | (+6%) | 462 | (-2%) | 498 | (+20%) |

**Tabelle 4**

| | | | D-1 | | | | | | | | | | D-2 | | | | | | **D-** -**3** | |
|---|---|---|---|---|---|---|---|---|---|---|---|---|---|---|---|---|---|---|---|---|
| | | EP-Zahl | Ex.8 | | Ex.9 | | Ex.10 | | Ex.11 | | Ex.12 | | Ex.13 | | Ex.14 | | Ex.15 | | Ex.16 | |
| A-Harz flüssig | | 0.54 | 44.00 | | 44.00 | | 44.00 | | 44.00 | | 44.00 | | 11.00 | | 11.00 | | 11.00 | | 0.00 | |
| Reaktivv. | | 0.80 | 0.50 | | 0.50 | | 0.50 | | 0.50 | | 0.50 | | 0.50 | | 0.50 | | 0.50 | | 0.50 | |
| D-1 | | | 22.00 | | 22.00 | | 22.00 | | 22.00 | | 22.00 | | | | | | | | | |
| D-2 | | 0.32 | | | | | | | | | | | 55.00 | | 55.00 | | 55.00 | | | |
| D-3 | | 0.36 | | | | | | | | | | | | | | | | | 66.00 | |
| B | | | 5.55 | | 3.55 | | 1.55 | | 4.55 | | 2.55 | | 5.55 | | 3.55 | | 1.55 | | 3.55 | |
| C | | | 2.00 | | 4.00 | | 6.00 | | 5.00 | | 3.00 | | 2.00 | | 4.00 | | 6.00 | | 4.00 | |
| Füllstoffgemisch | | | 20.06 | | 20.06 | | 20.06 | | 20.06 | | 20.06 | | 20.06 | | 20.06 | | 20.06 | | 20.06 | |
| Summe: | | | 94.11 | | 94.11 | | 94.11 | | 96.11 | | 92.11 | | 94.11 | | 94.11 | | 94.11 | | 94.11 | |
| B-Index | | | 22.97 | | 14.69 | | 6.42 | | 18.83 | | 10.55 | | 22.97 | | 14.69 | | 6.42 | | 14.71 | |
| C-Index | | | 8.28 | | 16.56 | | 24.83 | | 20.70 | | 12.42 | | 8.28 | | 16.56 | | 24.83 | | 16.57 | |
| Summe (B+C-Index) | | | 31.25 | | 31.25 | | 31.25 | | 39.53 | | 22.97 | | 31.25 | | 31.25 | | 31.25 | | 31.28 | |
| Verhältnis (B/C-Index | | | 2.78 | | 0.89 | | 0.26 | | 0.91 | | 0.85 | | 2.78 | | 0.89 | | 0.26 | | 0.89 | |
| **ZSF, 10' 140°C** | | MPa | 12.1 | | 17 | | 14.3 | | 17.4 | | 16.5 | | 2.04 | | 4.23 | | 1.59 | | 15.6 | |
| | | s | 1.19 | | 1.19 | | 2.05 | | 1.63 | | 1.87 | | 0.643 | | 1.53 | | 0.266 | | 0.586 | |
| **Rheologie,** 1 Tag nach Herstellung | 25°C | Pa*s | 883 | | 919 | | 967 | | 919 | | 925 | | 871 | | 851 | | 819 | | 598 | |
| | 50°C | Pa*s | 289 | | 289 | | 296 | | 275 | | 302 | | 58.5 | | 58.7 | | 58.2 | | 73.2 | |
| **Rheologie,** nach 1 Woche 50°C | 25°C | Pa*s | 1780 | +102% | 1980 | +115% | 3980 | +312% | 2610 | +184% | 1750 | +89% | 871 | 0% | 1370 | +61% | 1260 | +54% | 768 | +28% |
| | 50°C | Pa*s | 568 | +97% | 583 | +102% | 1150 | +289% | 754 | +174% | 529 | +75% | 65.4 | +12% | 88.6 | +51% | 85 | +46% | 85.1 | +16% |
| **I-Peel, 10' 140°C** | 23°C | N/mm | | | 19.82 | | | | | | | | | | 4.97 | | | | 17.17 | |
| | | s | | | 2.14 | | | | | | | | | | 0.21 | | | | 2.94 | |
| | - | N/mm | | | 15.45 | | | | | | | | | | 0.62 | | | | 12.98 | |
| | 30°C | s | | | 0.39 | | | | | | | | | | 0.07 | | | | 1.52 | |

**Tabelle 5**

| | | EP-Zahl | Ex.17 | | Ref.5 |
|---|---|---|---|---|---|
| A-Harz flüssig | | 0.54 | 38 | | 61 |
| Reaktivverdünner | | 0.80 | 0.5 | | 0.5 |
| A-Harz fest | | 0.315 | 4 | | 3 |
| D1 | | | 21 | | - |
| B | | | 3 | | 5 |
| C | | | 4 | | 6 |
| Füllstoffgemisch | | | 29.5 | | 24.5 |
| Summe: | | | 100 | | 100 |
| B-Index | | | 13.53 | | 14.58 |
| C-Index | | | 18.03 | | 17.50 |
| Summe (B+C-Index) | | | 31.56 | | 32.08 |
| Verhältnis (B/C-Index) | | | 0.75 | | 0.83 |
| **ZSF, 10' 135°C** | | MPa | 22.4 | | 10.9 |
| **I-Peel, 10' 135°C** | 23°C | N/mm | 17.7 | | 0.4 |
| | -30°C | N/mm | 12.0 | | 0.2 |
| **T-Peel, 10' 135°C** | | N/mm | 4.85 | | 0.52 |
| **Rheologie,** 1 Tag nach Herstellung | 25°C | Pa*s | 1573 | | 658 |
| | 50°C | Pa*s | 441 | | 231 |
| **Rheologie,** nach 1 Woche 60°C | 25°C | Pa*s | 4117 | (+162%) | ausgehärtet |
| | 50°C | Pa*s | 1169 | (+165%) | ausgehärtet |

**Tabelle 6**

| | EP-Zahl | in Gewichtsteilen |
|---|---|---|
| A-Harz flüssig | 0.54 | 40.00 |
| Reaktivverdünner | 0.80 | 0.50 |
| A-Harz fest | 0.315 | 4.00 |
| D1 | | 22.00 |
| B | | 4.50 |
| C | | 5.25 |
| Füllstoffgemisch | | 30.00 |
| Summe: | | 106.25 |

## Patentansprüche

1. Einkomponentige hitzehärtende Epoxidharzzusammensetzung umfassend
a) mindestens ein Epoxidharz **A** mit durchschnittlich mehr als einer Epoxidgruppe pro Molekül;
b) Dicyandiamid **B;**
c) mindestens einen Beschleuniger **C,** wobei es sich bei dem Beschleuniger **C** um eine Verbindung handelt, erhältlich durch Umsetzung von:
- 1 Gewichtsteil eines Amin/Epoxy-Addukts (a) mit
- 0.1 bis 0.8, vorzugsweise 0.2 bis 0.6, Gewichtsteilen einer Verbindung (b), ausgewählt der Gruppe bestehend aus Phenolharzen und mehrwertigen Phenolverbindungen;
wobei das Amin/Epoxy-Addukt (a) erhältlich ist durch eine Reaktion:
- einer Aminoverbindung (1) der Formel 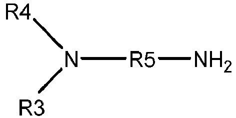 worin R3 und R4 unabhängig voneinander jeweils für eine Alkylgruppe mit 1 bis 5 Kohlenstoffatomen, insbesondere 1 bis 2 Kohlenstoffatomen, besonders bevorzugt 2 Kohlenstoffatomen, stehen und R5 für eine Alkylengruppe mit 1 bis 5 Kohlenstoffatomen, insbesondere 3 Kohlenstoffatomen, steht; oder
-vorzugsweise einer Aminoverbindungsmischung enthaltend die Aminoverbindung (1) und 1-Amino-4-ethylpiperazin (2) in einem Gewichtsverhältnis von (1) zu (2) von 70/30 bis 99/1, insbesondere 80/20 bis 97/3;
mit mindestens einem Epoxidharz mit durchschnittlich mehr als einer Epoxidgruppe pro Molekül (3), in einem solchen Verhältnis, dass die Menge der Epoxygruppen in dem Epoxidharz (3) 0.8 bis 2.5, insbesondere 1.0 bis 1.6, Äquivalente pro Äquivalent der Aminogruppen in der/den Aminoverbindung/en (1) oder (1) + (2) beträgt;
d) mindestens einen Zähigkeitsverbesserer **D;**
wobei das Verhältnis des Anteils Dicyandiamid **B** in Gramm pro mol Epoxidgruppen des Epoxidharz **A** von 3 - 40 g/mol Epoxidgruppen beträgt, und
wobei das Verhältnis des Anteils Beschleuniger **C** in Gramm pro mol Epoxidgruppen des Epoxidharz **A** von 5 - 35 g/mol Epoxidgruppen beträgt.

2. Einkomponentige hitzehärtende Epoxidharzzusammensetzung nach Anspruch 1, wobei das Dicyandiamid **B** eine mittlere Partikelgrösse D₅₀ von 0.5 - 50 µm, insbesondere 1 - 15 µm, bevorzugt 1 - 7 µm, insbesondere bevorzugt 2.1 - 5 µm, aufweist.

3. Einkomponentige hitzehärtende Epoxidharzzusammensetzung nach Anspruch 1 oder 2, wobei es sich bei der Aminoverbindung (1) des Beschleunigers **C** um H₂NCH₂CH₂CH₂N(C₂H₅)₂ (3-(Diethylamino)propylamin) oder H₂NCH₂CH₂CH₂N(CH3)₂ (3-(Dimethylamino)-1-propylamin), bevorzugt um H₂NCH₂CH₂CH₂N(C₂H₅)₂ (3-(Diethylamino)propylamin) handelt.

4. Einkomponentige hitzehärtende Epoxidharzzusammensetzung nach einem der vorgehenden Ansprüche, wobei es sich bei dem mindestens einen Epoxidharz mit durchschnittlich mehr als einer Epoxidgruppe pro Molekül (3) des Beschleunigers **C** um ein Epoxidharz der Formel (II) 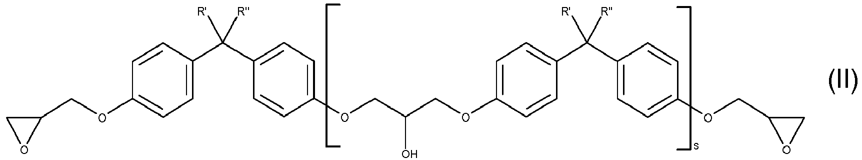 handelt, wobei die Substituenten R' und R" unabhängig voneinander entweder für H oder CH₃, insbesondere CH₃, stehen und der Index s für einen Wert von ≤ 2, insbesondere von ≤ 1.5, insbesondere von ≤ 1, besonders bevorzugt für einen Wert von kleiner als 0.2, steht.

5. Einkomponentige hitzehärtende Epoxidharzzusammensetzung nach einem der vorgehenden Ansprüche, wobei der Beschleuniger **C** eine mittlere Partikelgrösse D₅₀ von 0.5 - 50 µm, insbesondere 1 - 15 µm, bevorzugt 1 - 5 µm, besonders bevorzugt 1 - 3 µm, aufweist.

6. Einkomponentige hitzehärtende Epoxidharzzusammensetzung nach einem der vorgehenden Ansprüche, wobei das Verhältnis des Anteils Dicyandiamid **B** in Gramm pro mol Epoxidgruppen des Epoxidharz **A** von 6 - 30, 8 - 25, 12 - 25, 14 - 25, 17 - 25, bevorzugt 19 - 25, g/mol Epoxidgruppen beträgt.

7. Einkomponentige hitzehärtende Epoxidharzzusammensetzung nach einem der vorgehenden Ansprüche, wobei das Verhältnis des Anteils Beschleuniger C in Gramm pro mol Epoxidgruppen des Epoxidharz **A** von 10 - 26, 12 - 25, 15 - 22, g/mol Epoxidgruppen beträgt.

8. Einkomponentige hitzehärtende Epoxidharzzusammensetzung nach einem der vorgehenden Ansprüche, wobei das Verhältnis des Anteils Dicyandiamid **B** in Gramm pro mol Epoxidgruppen des Epoxidharz **A** von 6 - 30, 8 - 30, 8 - 25, 12 - 25, 14 - 25, 14 - 22, g/mol Epoxidgruppen, und das Verhältnis des Anteils Beschleuniger **C** in Gramm pro mol Epoxidgruppen des Epoxidharz **A** beträgt von 10 - 26, 10 - 25, 12 - 25, 12 - 22, 15 - 20, g/mol Epoxidgruppen beträgt.

9. Einkomponentige hitzehärtende Epoxidharzzusammensetzung nach einem der vorgehenden Ansprüche, wobei die Summe der beiden Verhältnisse ((Verhältnis des Anteils Dicyandiamid **B** in Gramm pro mol Epoxidgruppen des Epoxidharz **A**) + (Verhältnis des Anteils Beschleuniger **C** in Gramm pro mol Epoxidgruppen des Epoxidharz **A**) von 20 - 40 g/mol g/mol Epoxidgruppen, vorzugsweise von 55 - 35 g/mol g/mol Epoxidgruppen, beträgt, vorzugsweise handelt es sich bei dem Zähigkeitsverbesserer **D** um ein endständig blockiertes Polyurethanpolymer **D1.**

10. Einkomponentige hitzehärtende Epoxidharzzusammensetzung nach einem der vorgehenden Ansprüche, wobei das Verhältnis der beiden Verhältnisse ((Verhältnis des Anteils Dicyandiamid **B** in Gramm pro mol Epoxidgruppen des Epoxidharz **A**) / (Verhältnis des Anteils Beschleuniger **C** in Gramm pro mol Epoxidgruppen des Epoxidharz **A**) von 0.2 - 3, insbesondere von 0.3 - 2.5, besonders bevorzugt von 0.5 - 1.5, beträgt.

11. Einkomponentige hitzehärtende Epoxidharzzusammensetzung nach einem der vorgehenden Ansprüche, wobei der Zähigkeitsverbesserer **D** ausgewählt ist aus der Gruppe bestehend aus endständig blockierten Polyurethanpolymeren **D1,** Flüssigkautschuken **D2** und Core-Shell-Polymeren **D3,** vorzugsweise handelt es sich um endständig blockiertes Polyurethanpolymeren **D1.**

12. Verwendung einer hitzehärtenden Epoxidharzzusammensetzung gemäss einem der Ansprüche 1 bis 11 als einkomponentiger hitzehärtender Klebstoff, insbesondere als hitzehärtender einkomponentiger Rohbauklebstoff im Fahrzeugbau.

13. Verfahren zur Verklebung von hitzestabilen Substraten umfassend die Schritte
i) Applizieren einer hitzehärtenden Epoxidharzzusammensetzung gemäss einem der Ansprüche 1 bis 11 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220 °C, insbesondere von 120 - 200°C, bevorzugt zwischen 130 und 150°C besonders bevorzugt zwischen 130 und 140°C;
wobei das Substrat **S2** aus dem gleichen oder einem unterschiedlichen Material wie das Substrat **S1** besteht.

14. Verfahren gemäss Anspruch 13, wobei in dem Schritt iii) Erhitzen der Zusammensetzung auf eine Temperatur von 100 - 220 °C, insbesondere von 120 - 200°C, bevorzugt zwischen 130 und 150°C besonders bevorzugt zwischen 130 und 140°C die Zusammensetzung für 10 min - 6 h, 10 min - 2 h, 10 min - 60 min, 10 min - 30 min, 10 min - 20 min, besonders bevorzugt 10 min - 15 min, bei der vorgenannten Temperatur belassen wird.

15. Verklebter Artikel erhalten aus einem Verfahren gemäss einem der Ansprüche 13 bis 14.
